Europäisches Patentamt

**European Patent Office**

Office européen des brevets

(19)

(11) Numéro de publication: **0 272 169**
**B1**

(12)

# FASCICULE DE BREVET EUROPEEN

(45) Date de publication du fascicule du brevet:
**04.07.90**

(21) Numéro de dépôt: **87402506.7**

(22) Date de dépôt: **06.11.87**

(51) Int. Cl.⁵: **B63B 25/28**, B64F 1/12

(54) Dispositif de réception et de maintien pour systèmes d'accrochage de charges ou d'engins.

(30) Priorité: **19.11.86 FR 8616065**

(43) Date de publication de la demande:
**22.06.88 Bulletin 88/25**

(45) Mention de la délivrance du brevet:
**04.07.90 Bulletin 90/27**

(84) Etats contractants désignés:
**DE ES FR GB GR IT NL SE**

(56) Documents cités:
**EP-A- 0 052 966**
**FR-A- 2 180 499**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées(FR)**

(72) Inventeur: **Pacault, Michel, 13, rue Bernard Roy, F-44100 Nantes(FR)**
Inventeur: **Gallet, Jean-Jacques, 37, rue Camille Passarro, F-44400 Rèze(FR)**

## Description

Le secteur technique de la présente invention est celui des dispositifs de réception et de maintien pour systèmes d'accrochage utilisés dans l'amarrage de charges ou d'engins sur une plate-forme oscillante.

Dans le brevet FR-A-2 180 499, on a décrit un dispositif de ce genre comprenant une plaque supérieure perforée et des moyens support de cette plaque constitués d'épontilles et de profilés. Cette structure est intégrée dans la plate-forme de façon à constituer une continuité entre les deux surfaces. La plaque perforée repose sur un épaulement et l'ensemble plaque perforée/épontilles/profilés constitue une structure élastiquement déformable suspendue, apte à recevoir des efforts équivalents aux efforts maximaux auxquels peut être soumise la plate-forme elle-même. Les épontilles et les profilés sont conus pour assurer une résistance uniquement aux efforts de flexion engendrés par la charge, par une répartition des forces sur l'ensemble de la structure. Toutefois, ce dispositif présente deux inconvénients.

Il implique tout d'abord une découpe de la plate-forme et on comprend que lorsqu'il s'agit du pont d'un navire ce facteur doit être pris en compte dès la conception de ce navire. De plus, cette découpe affecte inévitablement la résistance du pont du navire.

D'autre part, on s'est rendu compte que pour des engins de masse élevée, par exemple supérieure à treize tonnes, il n'est pas envisageable d'utiliser ce dispositif tel que, même en imaginant une fixation directe sur la plate-forme, car cette structure suspendue n'est pas conçue pour résister à des efforts de compression sur la plate-forme.

Dans le brevet GB-A-1 177 751, on a déjà proposé de fixer sur le pont d'un navire un dispositif de réception d'un hélicoptère, mais il s'agit d'un système à barreaux dont les extrémités sont boulonnées sur un support sensiblement vertical. Ce sytème n'est pas utilisable avec des engins lourds dont la masse est de l'ordre de treize tonnes et n'a jamais été fabriqué industriellement.

Le but de la présente invention est de fournir un dispositif de réception apte à résister aux efforts de compression et de traction exercés par les hélicoptères lourds, dont le montage sur une plate-forme n'affecte pas la résistance de celle-ci et ce, en faible surélévation par rapport à cette plate-forme.

L'invention a donc pour objet un dispositif de réception et de maintien pour un système d'accrochage de charges ou d'engins sur une plate-forme, du type comportant une plaque supérieure perforée et des moyens de support de celle-ci, reliés entre eux par des épontilles, caractérisé en ce que les moyens de support sont constitués par une plaque inférieure, d'épaisseur sensiblement constante, reposant sur la plate-forme, coopérant avec les épontilles comportant chacune deux épaulements en appui respectivement sur la plaque supérieure et sur la plaque inférieure pour constituer un élément résistant et maintenir un écart constant entre la plaque perforée et la plaque inférieure.

L'épaisseur de la plaque inférieure est faible par rapport à celle de la plaque supérieure, par exemple inférieure à 1 cm.

Le dispositif comprend un système de fixation de la plaque perforée sur la plate-forme, constitué par au moins une entretoise.

L'entretoise est constituée d'un ensemble de pieds soudés sur la plate-forme, la plaque perforée étant liée à chaque pied par une vis.

L'entretoise est constituée par un ensemble d'embases fixées sur la plate-forme, un plot étant fixé dans un évidement de chaque embase.

La plaque perforée est reliée à chaque plot à l'aide d'une vis engagée longitudinalement dans celui-ci.

Chaque plot est scellé dans l'embase à l'aide d'une couche de résine synthétique.

Chaque l'embase est fixée par soudure sur la plate-forme.

Chaque embase est engagée dans une échancrure pratiquée dans la plaque inférieure.

Une couche de résine synthétique est disposée entre la plaque inférieure et la plate-forme d'une part, et entre la plaque inférieure et l'entretoise d'autre part.

Un avantage de la présente invention réside dans le fait que le dispositif selon l'invention peut être installé sur n'importe quelle surface d'accueil relativement plane.

Un autre avantage réside dans le fait que la rigidité de la plate-forme est utilisée pour participer en totalité à la prise en charge des efforts de compression et de traction engendrés par la charge qu'on se propose de recevoir.

Un autre avantage réside dans la faible surépaisseur de dispositif par rapport à la surface de la plate-forme.

Un autre avantage encore de l'invention réside dans le fait que le moyen support joue également le rôle d'un moyen de renfort de la structure en améliorant sa résistance à la compression et surtout à la traction.

D'autres avantages de l'invention seront mieux compris à l'aide du complément de description donné ci-après en relation avec un dessin sur lequel:

- la figure 1 représente une vue partielle de dessus du dispositif selon l'invention monté sur une plate-forme,
- la figure 2 est une coupe A-A de la figure 1,
- la figure 3 est une coupe B-B de la figure 1.
- les figures 4 et 5 représentent des variantes de réalisation de l'entretoise.

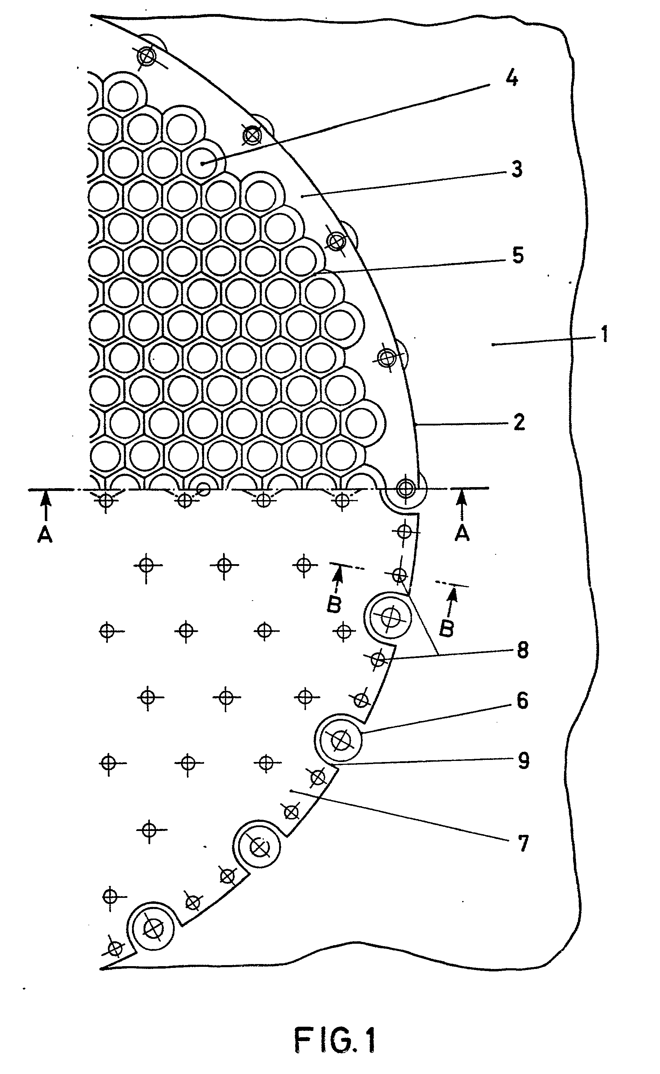

Sur la figure 1, on a représenté une plate-forme 1, qui peut être par exemple le pont d'un navire, sur laquelle est fixé le dispositif 2 selon l'invention, destiné à la réception et au maintien de charges ou d'engins, tels les hélicoptères.

Le dispositif 2 selon l'invention comprend une plaque supérieure perforée 3 dont la structure a été décrite dans le brevet français précité, un ensemble d'épontilles 8 et une plaque inférieure 7. La plaque supérieure comporte en tre autres une série de trous 4 dont les centres sont disposés aux sommets de triangles équilatéraux. Le reste de matière entre deux trous consécutifs délimite un barreau 5 de matière sur lequel vient s'accrocher un harpon de manière connue. L'ensemble des trous de la plaque supérieure constitue un réseau en nid d'abeilles comme expliqué dans le brevet français précité. La plaque inférieure 7 est reliée à la plaque supérieure 3 par un ensemble d'épontilles 8 vissées d'une part, dans les barreaux 5 et d'autre part, dans l'épaisseur de la plaque inférieure 7. Cette plaque peut être posée directement sur la plate-forme. La plaque supérieure 3 est fixée périphériquement à la plate-forme 1 par une série d'entretoises 6. Des échancrures 9 sont pratiquées dans la plaque inférieure 7 afin d'assurer un logement partiel des entretoises, tout en délimitant la position relative de celle-ci par rapport aux entretoises.

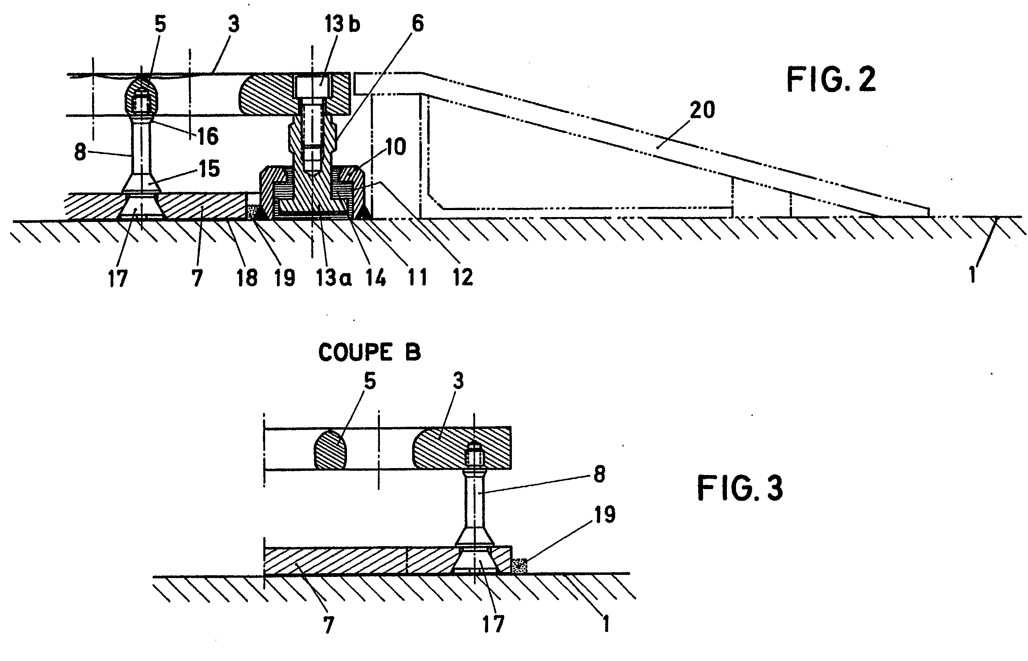

Sur la figure 2, on a représenté une coupe montrant une structure particulière d'une entretoise 6 et d'une épontille 8. Chaque épontille 8 comprend deux épaulements 15 et 16 délimitant l'écart entre les plaques 3 et 7. L'épontille est vissée dans le barreau 5 d'une part, et est reliée à la plaque 7 par l'intermédiaire de l'écrou 17 vissé sur son extrémité filetée d'autre part. Chaque entretoise 6 comprend une embase 10 fixée sur la plate-forme 1 par une soudure 11 périphérique ou tout autre moyen équivalent. L'embase comprend un évidement 12 et présente, sur la figure, une forme générale cylindrique creuse à base perforée. Un plot métallique 13a est engagé dans l'évidement 12 et y est scellé par une couche 14 de résine synthétique. Cette couche peut être disposée comme le montre la figure à la base du plot afin de constituer un montage rigide résistant aussi bien aux efforts de compression que de traction. La plaque 3 repose sur l'extrémité libre du plot et y est fixée à l'aide d'une vis 13b vissée longitudinalement dans le plot 13a. Pour compenser les éventuelles irrégularités de surface de la plate-forme 1, une couche 18 de résine est interposée entre celle-ci et la plaque inférieure 7, ce qui assure un contact parfait avec ladite plate-forme et par suite un renforcement de la résistance aux efforts de traction exercés sur le dispositif. Une autre couche 19 de résine est disposée à la périphérie de la plaque inférieure 7 pour limiter ses déplacements éventuels et interdire toute infiltration de liquide. On a encore représenté sur cette figure une rampe inclinée 20 pour faciliter les manutentions de l'engin.

Sur la figure 3, on a représenté l'épontille 8 fixée au niveau des bords des plaques 3 et 7 de façon identique au mode de réalisation décrit précédemment.

A titre indicatif, la surépaisseur créée par le dispositif selon l'invention est de l'ordre de 10 cm et celui-ci peut recevoir des charges dépassant 13 tonnes. On a constaté de façon surprenante que l'épaisseur de la plaque inférieure 7 peut être faible par rapport à celle de la plaque supérieure. Cette épaisseur est environ 5 fois inférieure à celle de la plaque supérieure, par exemple inférieure à 1 cm et elle varie en fonction de la rigidité de la plate-forme d'accueil. Des essais réalisés avec une simple tôle de l'ordre de 2 à 5 mm d'épaisseur ont montré que le dispositif selon l'invention résiste à l'arrachement provoqué par un hélicoptère de treize tonnes. Ainsi, l'ensemble de la structure participe à la résistance en traction.

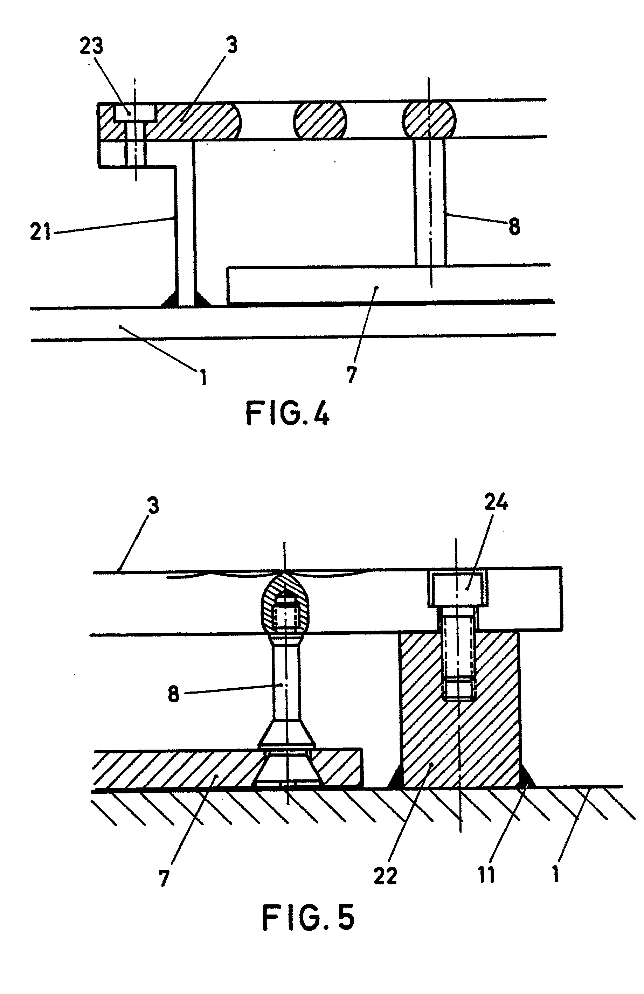

Sur les figures 4 et 5, on a représenté une variante de réalisation de l'entretoise qui se présente sous la forme d'un ensemble de pieds de calage, par exemple sous forme de cylindre 22, ou bien de pièces en L 21, soudés à une extrémité sur la plate-forme. Toutefois, ces pieds peuvent être réunis afin de constituer une pièce annulaire unique ou des secteurs annulaires reliant la plate-forme à la plaque perforée supérieure comme indiqué précédemment. Bien entendu, ces pieds sont fixés à la plaque perforée 3 par des vis 23 et 24.

**Revendications**

1 - Dispositif de réception et de maintien pour un système d'accrochage de charges ou d'engins sur une plate-forme (1), du type comportant une plaque supérieure perforée (3) et des moyens de support (7) de celle-ci, reliés entre eux par des épontilles (8), caractérisé en ce que les moyens de support sont constitués par une plaque inférieure (7), d'épaisseur sensiblement constante, reposant sur la plate-forme (1), coopérant avec les épontilles (8) comportant chacun deux épaulements (15, 16) en appui respectivement sur la plaque supérieure (3) et sur la plaque inférieure (7) pour constituer un élément résistant et maintenir un écart constant entre la plaque perforée (3) et la plaque inférieure (7).

2 - Dispositif selon la revendication 1, caractérisé en ce que l'épaisseur de la plaque inférieure (7) est faible par rapport à celle de la plaque supérieure, par exemple inférieure à 1 cm.

3 - Dispositif selon la revendication 1 ou 2, caractérisé en ce qu'il comprend un système de fixation de la plaque perforée (3) sur la plate-forme (1), constitué par au moins une entretoise (6).

4 - Dispositif selon la revendication 3, caractérisé en ce que l'entretoise est constituée d'un ensemble de pieds (21,22) soudés sur la plate-forme, la plaque perforée étant liée à chaque pied par une vis.

5 - Dispositif selon la revendication 3 ou 4, caractérisé en ce que l'entretoise est constituée par un ensemble d'embases (10) fixées sur la plate-forme (1), un plot (13a) étant fixé dans un évidement (12) de chaque embase.

6 - Dispositif selon la revendication 5, caractérisé en ce que la plaque perforée (3) est reliée à chaque plot (13a) à l'aide d'une vis (13b) engagée longitudinalement dans celui-ci.

7 - Dispositif selon la revendication 5 ou 6, caractérisé en ce que chaque plot (13a) est scellé dans l'embase (10) à l'aide d'une couche (14) de résine synthétique.

8 - Dispositif selon l'une quelconque des revendications 5 à 7, caractérisé en ce chaque l'embase (10) est fixée par soudure sur la plate-forme.

9 - Dispositif selon l'une quelconque des revendications 5 à 8, caractérisé en ce que chaque embase (10) est engagée dans une échancrure (9) pratiquée dans la plaque inférieure.

10 - Dispositif selon l'une quelconque des revendications 3 à 9, caractérisé en ce qu'une couche de résine synthétique (18,19) est disposée entre la plaque inférieure (7) et la plate-forme (1) d'une part, et entre la plaque inférieure (7) et l'entretoise (6) d'autre part.

## Patentansprüche

1. Aufnahme- und Festhaltevorrichtung für das Zurren von Lasten oder Fahrzeugen auf einer Plattform (1), bestehend aus einer oberen Lochplatte (3) sowie aus Halterungsmitteln (7), die miteinander durch Stützen (8) verbunden sind, dadurch gekennzeichnet, daß die Halterungsmittel aus einer unteren Platte (7) von beinahe konstanter Stärke bestehen, die auf der Plattform (1) beruht und mit den Stützen (8) zusammenwirkt, die durch deren beiden, auf der oberen bzw. unteren Platte stützenden Bunde (15, 16) ein steifes Element bilden und einen gleichmässigen Abstand zwischen der Lochplatte (3) und der unteren Platte (7) gewähren.

2. Vorrichtung nach Anspruch 1, dadurch gekennzeichnet, daß die Stärke der unteren Platte (7) gering gegenüber derjenigen der oberen Platte, z.B. geringer als 1 cm ist.

3. Vorrichtung nach Anspruch 1 oder 2, dadurch gekennzeichnet, daß sie ein System zur Befestigung der Lochplatte (3) auf der Plattform (1) darstellt, das mindestens aus einem Steg (6) besteht.

4. Vorrichtung nach Anspruch 3, dadurch gekennzeichnet, daß der Steg (6) aus einer Menge von auf der Plattform geschweißten Auflagen (21, 22) besteht, wobei die Lochplatte auf jeder Auflage durch eine Schraube befestigt ist.

5. Vorrichtung nach Anspruch 3 oder 4, dadurch gekennzeichnet, daß der Steg aus einer Menge von auf der Plattform (1) befestigten Fassungen (10) besteht, wobei ein Stempel (13a) in der Aufnahme (12) jeder Fassung festgesetzt wird.

6. Vorrichtung nach Anspruch 5, dadurch gekennzeichnet, daß die Lochplatte (3) mit jedem Stempel (13a) durch eine senkrecht eingeführte Schraube (13b) verbunden ist.

7. Vorrichtung nach Anspruch 5 oder 6, dadurch gekennzeichnet, daß jeder Stempel (13a) in der Aufnahme der Fassung (10) durch eine Schicht Kunstharz vergossen wird.

8. Vorrichtung nach einem beliebigen Anspruch 5 bis 7, dadurch gekennzeichnet, daß jede Fassung (10) durch Schweißen auf der Plattform befestigt ist.

9. Vorrichtung nach einem beliebigen Anspruch 5 bis 8, dadurch gekennzeichnet, daß die Fassungen (10) jeweils in einer Aussparung (9) der unteren Platte (7) angeordnet sind.

10. Vorrichtung nach einem beliebigen Anspruch 3 bis 9, dadurch gekennzeichnet, daß eine Schicht Kunstharz (18, 19) zwischen der unteren Platte (7) und der Plattform (1) einerseits sowie zwischen der unteren Platte (7) und dem Steg (6) andererseits vergossen wird.

## Claims

1. A reception and securing device for a hooking system used for mooring loads or vehicles onto a platform (1), of the type including one upper perforated plate (3) and support: means (7) for said plate, connected together by pillars (8), characterized by the fact that the support means are made up of one lower plate (7) of approximately constant thickness in contact with said platform (1), in combination with said pillars (8) which comprise two shoulders (15, 16) respectively in contact with said upper (3) and lower (7) plates, to make a strong unit and to provide a constant separation between said upper perforated plate (3) and said lower plate (7).

2. A device according to claim 1, characterized by the fact that the thickness of said lower plate (7) is thin comparatively to the thickness of said upper plate, for example lower than or equal to 1 cm.

3. A device according to claim 1 or 2, characterized by the fact it comprises means for securing said upper plate (3) to said platform (1), said means being constituted by one spacer (6).

4. A device according to claim 3, characterized by the fact that the spacer consists of a set of legs (10) welded to said platform (1), the upper plate being attached to each leg by a screw.

5. A device according to claim 3 or 4, characterized by the fact that the spacer consists of a set of bases (10) fastened to said platform (1), one female stud (13a) being secured in an opening (12) of each base.

6. A device according to claim 5, characterized by the fact that the perforated plate (3) is connected to each female stud (13a) by one screw (13a) fitted longitudinally into said stud.

7. A device according to claim 5 or 6, characterized by the fact that each female stud (13a) is sealed in each said base (10) by a packing (14) of synthetic resin.

8. A device according to one of the claims 5 to 7, characterized by the fact that each base (10) is welded to said platform.

9. A device according to one of the claim 1 to 8, characterized by the fact that each base (10) is fitted into a groove (9) of said lower plate.

10. A device according to one of the claim 1 to 9, characterized by the fact that a film of synthetic resin (18, 19) is laid between said lower plate (7) and said platform (1) on the one side, and between the lower plate (7) and the spacer (6) on the other side.

EP 0 272 169 B1

FIG.1

FIG. 2

COUPE B

FIG. 3

EP 0 272 169 B1

FIG.4

FIG.5